# EUROPEAN PATENT APPLICATION

(11) **EP 4 693 126 A1**
(43) Date of publication of application: **11.02.2026**
(21) Application number: 24780901.5
(22) Date of filing: 29.03.2024
(51) Int. Cl.: G06Q 10/06, G06Q 50/04, G06Q 10/04, G06F 17/40, G06F 30/27, G06N 20/00, G06Q 10/30, G06Q 50/00, G06Q 10/10

(54) **MATERIAL SEARCH SUPPORT DEVICE, METHOD, AND PROGRAM**

(30) Priority: 29.03.2023 WO PCT/JP2023/013002
(71) Applicant: RESONAC CORPORATION, Tokyo 105-7325 (JP)
(72) Inventor: FUKUHARA, Kiichi, Tokyo 105-7325 (JP); CHEN, Li-Hsin, Tokyo 105-7325 (JP); MOROSAKI, Tomohito, Tokyo 105-7325 (JP)
(74) Representative: Hoffmann Eitle
(86) International application number: PCT/JP2024/013286
(87) International publication number: WO 2024/204807

(57) **Abstract**

A material search support device: acquires product information collected from documents on the internet for each of a plurality of products, the product information including basic configuration information of the products, blending ratios of materials included in the products, and specific information including at least one of physical properties of the products, biomass content of the products, and process conditions during use of the products; estimates one or more candidates for material blending ratios and specific information with respect to the basic configuration information of a designated product using an estimation model trained to estimate material blending ratios and specific information with respect to the basic configuration information of the products based on the acquired product information; calculates, for each of the estimated candidates, environmental impact indicators based on the material blending ratios and the specific information represented by each of the candidates; and outputs support information that associates each of the candidates with the environmental impact indicators calculated by the calculation unit.

## Description

### Technical field

This disclosure relates to a material search support device, a material search support method, and a material search support program.

### Background art

The problem of global warming in recent years has led to a demand for carbon neutrality in product production. For example, the utilization of biological resources (biomass) as materials for products is being promoted.

As a technology relating to the utilization of biomass, a biomass effective utilization support system that can efficiently process biomass has been proposed. This system inputs the type and input amount of input biomass selected from the group comprising sewage sludge, livestock waste, waste wood, kitchen waste, and other waste. Furthermore, this system registers in advance unique characteristic data that devices including pretreatment devices, anaerobic digesters, dehydrators, heat exchangers, incinerators, and generators have, selects at least one from among the registered devices, and constructs a biomass processing flow. Additionally, this system calculates at least one of the quality of wastewater that will occur and the amount of waste that will be generated when the biomass is processed by the set device configuration and processing flow, the amount of biogas generated, the amount of energy that can be recovered or the amount of power generating energy that can be generated from the biogas, and running costs required to operate the processing facility.

### Citation list

### Patent Literature

Patent Document 1: JP-A No. 2021-149905

### SUMMARY OF INVENTION

### Technical Problem

In addition to utilizing biobased materials as materials that configure products, there are other factors that can contribute to carbon neutrality. There is a demand to take these factors into consideration and search for appropriate materials to utilize in the production of products.

It is an object of this disclosure to provide a material search support device, method, and program that can support searches for appropriate materials that are carbon neutral.

### Solution to Problem

**In** order to achieve the above object, a material search support device pertaining to this disclosure includes: an acquisition unit that acquires product information collected from documents on the internet for each of a plurality of products, the product information including basic configuration information of the products, blending ratios of materials included in the products, and specific information including at least one of physical properties of the products, biomass content of the products, and process conditions during use of the products; an estimation unit that estimates one or more candidates for material blending ratios and specific information with respect to the basic configuration information of a designated product using an estimation model trained to estimate material blending ratios and specific information with respect to the basic configuration information of the products based on the product information acquired by the acquisition unit; a calculation unit that calculates, for each of the candidates estimated by the estimation unit, environmental impact indicators based on the material blending ratios and the specific information represented by each of the candidates; and an output unit that outputs support information that associates each of the candidates with the environmental impact indicators calculated by the calculation unit. Because of this, searches for appropriate materials that are carbon neutral can be supported.

Furthermore, the acquisition unit may extract from the documents, and acquire as the product information, information relating to keywords corresponding to the product information.

Furthermore, the documents may include at least one of patent documents and public information of companies including catalogs.

Furthermore, the material search support device may include a collection unit that collects the documents from the internet.

Furthermore, the basic configuration information of the products may include general configurations of the products and types of materials that are utilized.

Furthermore, the calculation unit may calculate, as the environmental impact indicators, carbon dioxide emissions relating to the products when the material blending ratios and the specific information represented by the candidates have been employed.

Furthermore, the output unit may output support information that ranks a predetermined number of the candidates with the top environmental impact indicators.

Furthermore, the output unit may add to the support information and output the documents corresponding to the product information, related information extracted from the documents, or information searched for on the internet based on the support information.

Furthermore, the material search support device may include a training unit that trains the estimation model based on the product information acquired by the acquisition unit.

Furthermore, a material search support method pertaining to this disclosure is a material search support method executed by a material search support device including an acquisition unit, an estimation unit, a calculation unit, and an output unit, wherein: the acquisition unit acquires product information collected from documents on the internet for each of a plurality of products, the product information including basic configuration information of the products, blending ratios of materials included in the products, and specific information including at least one of physical properties of the products, biomass content of the products, and process conditions during use of the products; the estimation unit estimates one or more candidates for material blending ratios and specific information with respect to the basic configuration information of a designated product using an estimation model trained to estimate material blending ratios and specific information with respect to the basic configuration information of the products based on the product information acquired by the acquisition unit; the calculation unit calculates, for each of the candidates estimated by the estimation unit, environmental impact indicators based on the material blending ratios and the specific information represented by each of the candidates; and the output unit outputs support information that associates each of the candidates with the environmental impact indicators calculated by the calculation unit.

Furthermore, a material search support program pertaining to this disclosure is a material search support program for causing a computer to function as: an acquisition unit that acquires product information collected from documents on the internet for each of a plurality of products, the product information including basic configuration information of the products, blending ratios of materials included in the products, and specific information including at least one of physical properties of the products, biomass content of the products, and process conditions during use of the products; an estimation unit that estimates one or more candidates for material blending ratios and specific information with respect to the basic configuration information of a designated product using an estimation model trained to estimate material blending ratios and specific information with respect to the basic configuration information of the products based on the product information acquired by the acquisition unit; a calculation unit that calculates, for each of the candidates estimated by the estimation unit, environmental impact indicators based on the material blending ratios and the specific information represented by each of the candidates; and an output unit that outputs support information that associates each of the candidates with the environmental impact indicators calculated by the calculation unit.

### Advantageous Effects of Invention

According to the material search support device, method, and program pertaining to this disclosure, searches for appropriate materials that are carbon neutral can be supported.

### BRIEF DESCRIPTION OF THE DRAWINGS

FIG. 1 is a block diagram showing hardware configurations of a material search support device.
FIG. 2 is a block diagram showing an example of functional configurations of the material search support device.
FIG. 3 is a drawing showing an example of a product information DB.
FIG. 4 is a drawing showing an example of support information that is output.
FIG. 5 is a flowchart showing an example of a training process.
FIG. 6 is a flowchart showing an example of a support process.

### DESCRIPTION OF EMBODIMENT

An example of an embodiment will be described below with reference to the drawings.

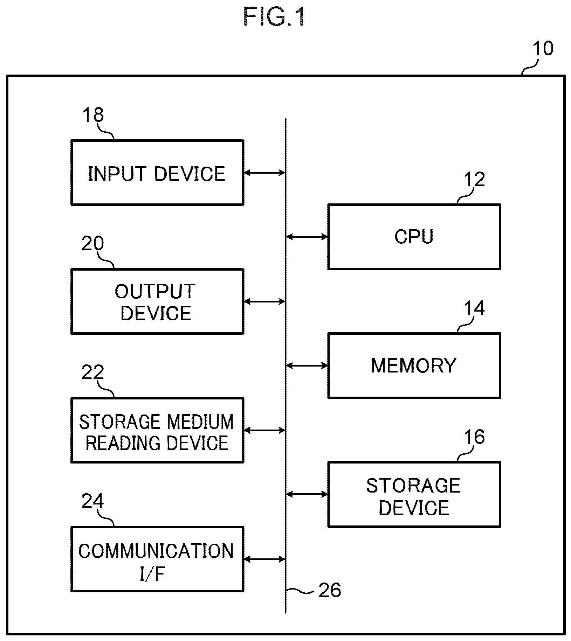

FIG. 1 is a block diagram showing hardware configurations of a material search support device 10. As shown in FIG. 1, the material search support device 10 has a central processing unit (CPU) 12, a memory 14, a storage device 16, an input device 18, an output device 20, a storage medium reading device 22, and a communication interface (I/F) 24. These configurations are communicably connected to each other via a bus 26.

The storage device 16 stores a material search support program for executing a training process and a support process relating to a material search support method described below. The CPU 12 is a central arithmetic processing unit, executes various types of programs, and controls each configuration. That is, the CPU 12 reads programs from the storage device 16 and executes the programs using the memory 14 as a workspace. The CPU 12 controls each of the above configurations and performs various types of arithmetic processing in accordance with the programs stored in the storage device 16.

The memory 14 is configured by a random-access memory (RAM) and temporarily stores programs and data as a workspace. The storage device 16 is configured by a read-only memory (ROM), a hard disk drive (HDD), or a solid-state drive (SSD) and stores various types of programs, including an operating system, and various types of data.

The input device 18 is a device for performing various types of input, such as a keyboard and a mouse, for example. The output device 20 is a device for outputting various types of information, such as a display and a printer, for example. A touch panel display may be employed for the output device 20, thus allowing it to also function as the input device 18.

The storage medium reading device 22 reads data stored in various types of storage media, such as compact disc (CD)-ROMs, digital versatile disc (DVD)-ROMs, Blu-ray discs, and universal serial bus (USB) memories, and writes data to the storage media. The communication I/F 24 is an interface for communicating with other devices and uses a standard such as Ethernet (registered trademark), FDDI, or Wi-Fi (registered trademark).

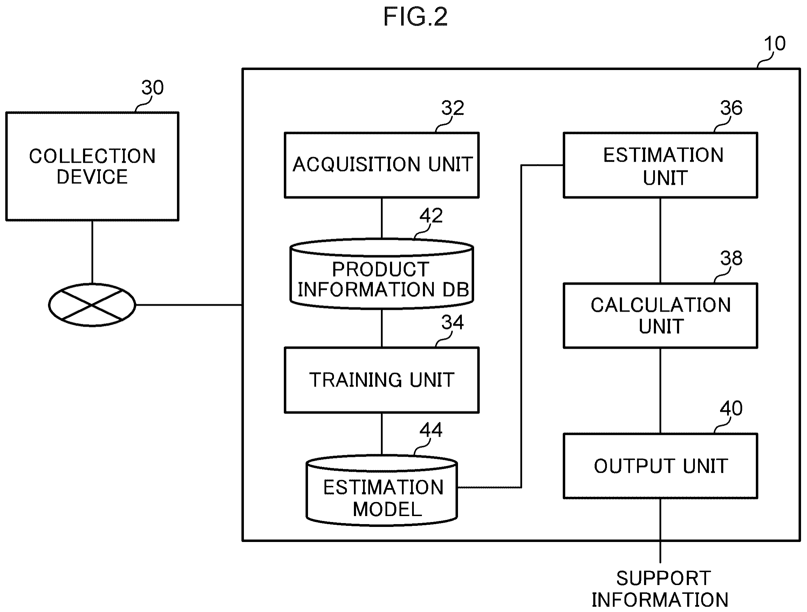

As shown in FIG. 2, the material search support device 10 is connected to a collection device 30 via a network.

The collection device 30 collects documents relating to product information (details described later) from the internet for each of a plurality of products. The documents are, for example, patent documents and public information of companies including catalogs.

Specifically, the collection device 30 searches the internet for and collects documents including keywords relating to product information. For example, the collection device 30 collects documents including information about formulation systems, such as examples and comparative examples relating to the products. The collected documents may be entire documents or extracts of appropriate parts from the documents. In the latter case, for example, the collection device 30 may collect, as the collected information, information appearing in specific sections of documents whose formats are specified in advance, such as patent documents. The collection device 30 inputs the collected documents to the material search support device 10.

Next, functional configurations of the material search support device 10 will be described. As shown in FIG. 2, the material search support device 10 includes, as functional configurations, an acquisition unit 32, a training unit 34, an estimation unit 36, a calculation unit 38, and an output unit 40. Furthermore, a product information database (DB) 42 and an estimation model 44 are stored in a predetermined storage region in the material search support device 10. Each functional configuration is realized by the CPU 12 reading the material search support program stored in the storage device 16, loading it to the memory 14, and executing it.

The acquisition unit 32 acquires the documents for each of the plurality of products collected by the collection device 30. Furthermore, the acquisition unit 32 extracts the product information from the acquired documents and stores it in the product information DB 42. The product information includes basic configuration information of the products, blending ratios of materials included in the products, and specific information including at least one of physical properties of the products, biomass content of the products, and process conditions during use of the products. The product basic configuration information is, for example, the general configuration of the products (e.g., in the case of a semiconductor, its layer configuration) and the types of materials that are utilized.

Specifically, the acquisition unit 32 extracts, and acquires as the product information, information relating to keywords corresponding to the product information from the documents acquired from the collection device 30. Keywords relating to blending ratios of materials may, for example, be names of components, such as epoxy, acrylate, filler, and curing accelerator, and contents. Furthermore, keywords relating to physical properties may, for example, be glass transition point, coefficient of linear expansion, elastic modulus, and reliability tests, such as moisture and heat resistance tests such as high temperature and humidity tests, temperature cycle tests, and accelerated aging tests. Furthermore, keywords relating to biomass content may, for example, be keywords relating to the ratio of carbon derived from biomass raw materials included in raw materials and products. Furthermore, keywords relating to process conditions may, for example, be keywords relating to temperature, time, and pressure during use of the products and temperature and lifetime during storage and transport.

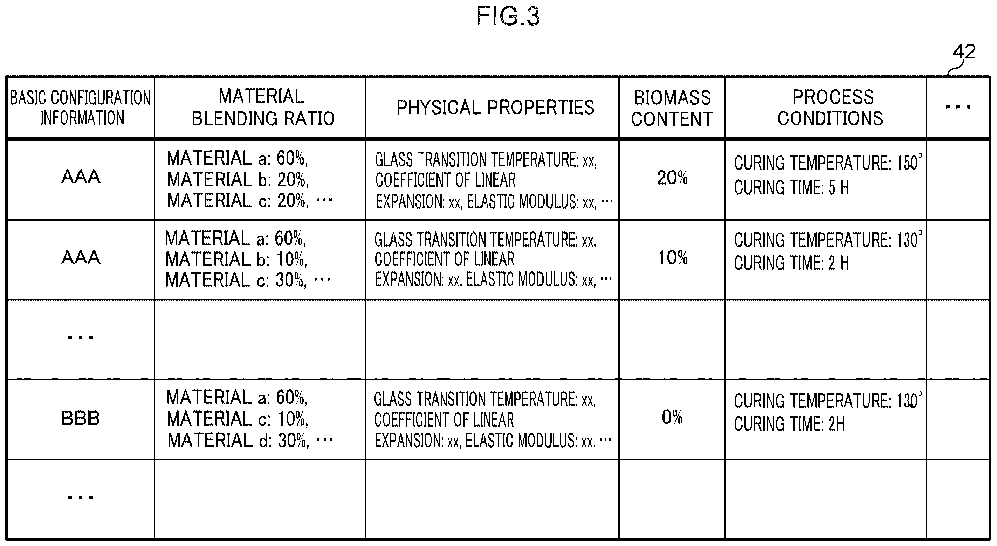

The acquisition unit 32 stores the acquired product information in the product information DB 42. FIG. 3 shows an example of the product information DB 42. In the example of FIG. 3, product information such as "material blending ratio," "physical properties," "biomass content," and "process conditions" is stored in association with the "basic configuration information" of the products. It will be noted that the data structure of the product information DB 42 is an example, and the data need only be structured in a format that can be applied to training of the estimation model 44 described below.

The training unit 34 trains the estimation model 44 to estimate material blending ratios and specific information with respect to the basic configuration information of the products based on the product information stored in the product information DB 42. The estimation model 44 may be a machine learning model or a materials informatics or statistical analysis software interface. The training unit 34 stores the trained estimation model 44 in a predetermined storage region in the material search support device 10.

The estimation unit 36 uses the estimation model 44 to estimate one or more candidates for material blending ratios and specific information with respect to the basic configuration information of a designated product. Specifically, the estimation unit 36 receives from a user a designation of the basic configuration information of a product to be produced. The estimation unit 36 inputs the received basic configuration information to the estimation model 44 and acquires one or more candidates for material blending ratios and the specific information that are output from the estimation model 44.

The calculation unit 38 calculates, for each of the candidates estimated by the estimation unit 36, environmental impact indicators based on the material blending ratios and the specific information represented by each of the candidates. Specifically, the calculation unit 38 calculates life cycle assessment (LCA) values for the product when the material blending ratios and the specific information represented by the candidates have been employed for the designated basic configuration information. The LCA values are indicators that quantitatively represent the environmental impact of the product throughout its life cycle. The LCA values may, for example, be values that increase as the biomass content increases. Furthermore, the LCA values may be values that increase as curing time, which is an example of a process condition, decreases or as curing temperature decreases. For example, the LCA values may be evaluation values relating to carbon dioxide emissions.

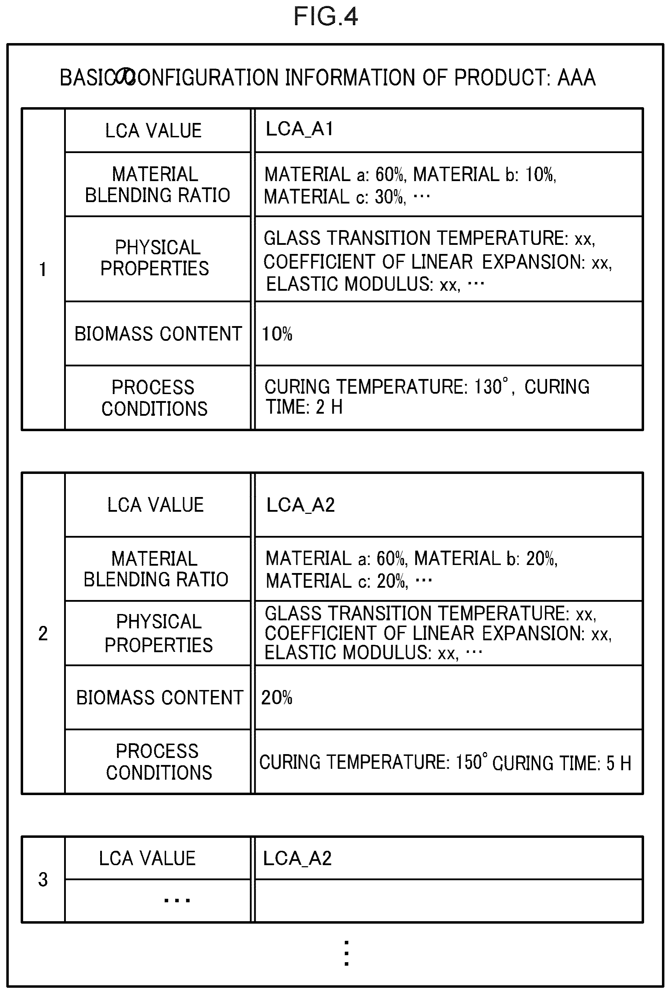

The output unit 40 outputs support information that associates each of the candidates for material blending ratios and specific information with the environmental impact indicators calculated by the calculation unit 38 for each candidate. Specifically, the output unit 40 outputs support information that ranks a predetermined number of the candidates with the top environmental impact indicators. FIG. 4 shows an example of the support information that is output.

Furthermore, the output unit 40 may add to the support information the documents corresponding to the product information represented by each candidate in the support information, related information extracted from the documents, or information searched for on the internet based on the product information represented by each candidate in the support information. For example, the output unit 40 may search the product information DB 42 for product information that matches or is similar to the product information represented by each candidate in the support information and use the documents corresponding to the searched-for product information as additional information. Furthermore, the output unit 40 may use, as additional information, information such as LCA-related effects achieved by the products with specific compositions disclosed in documents, information about the appropriateness of applying specific materials to the products, LCA-related effects required of the products, and types of materials restricted by laws and regulations.

Next, the action of the material search support device 10 pertaining to this embodiment will be described.

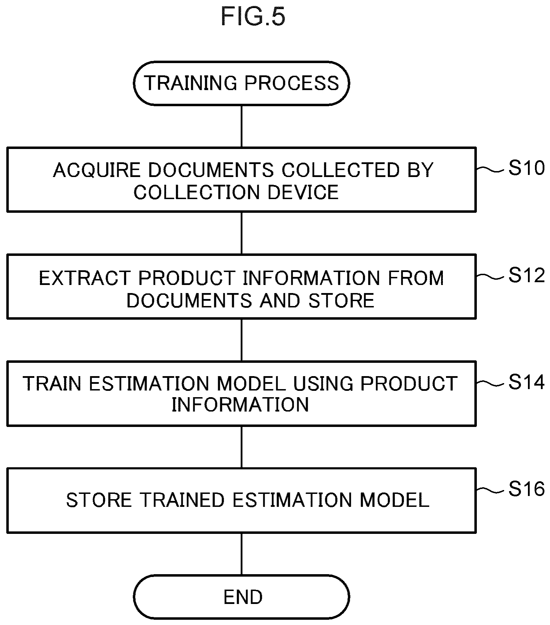

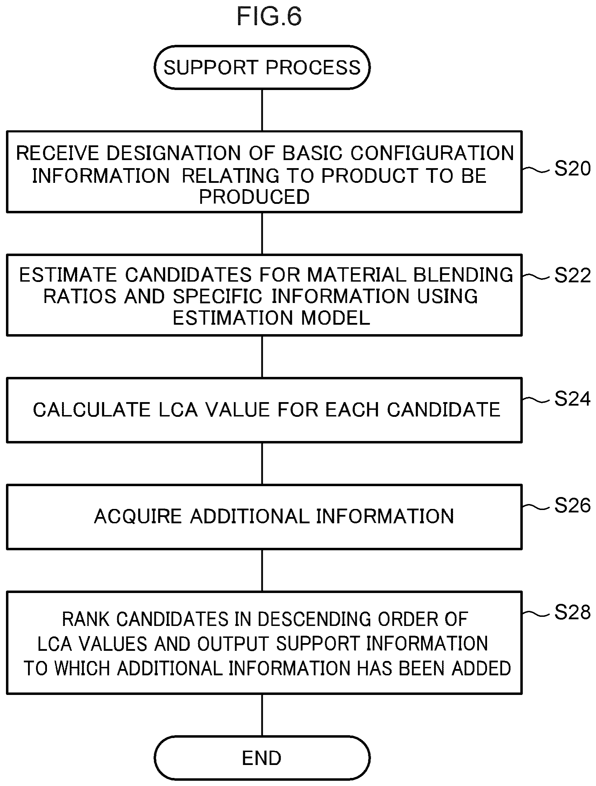

When training of the estimation model 44 is instructed, the material search support device 10 executes a training process shown in FIG. 5. Furthermore, when the basic configuration information of a product is designated and output of the support information is instructed, the material search support device 10 executes a support process shown in FIG. 6.

First, the training process shown in FIG. 5 will be described.

In step S10, the acquisition unit 32 acquires the documents for each of the plurality of products collected by the collection device 30. Next, in step S12, the acquisition unit 32 extracts the product information from the acquired documents and stores it in the product information DB 42.

Next, in step S14, the training unit 34 trains the estimation model 44 to estimate material blending ratios and specific information with respect to the basic configuration information of the products based on the product information stored in the product information DB 42. Next, in step S16, the training unit 34 stores the trained estimation model 44 in a predetermined storage region in the material search support device 10, and the training process ends.

Next, the support process shown in FIG. 6 will be described.

In step S20, the estimation unit 36 receives from the user a designation of the basic configuration information of a product to be produced. Next, in step S22, the estimation unit 36 inputs the received basic configuration information to the estimation model 44 and acquires the one or more candidates for material blending ratios and specific information output from the estimation model 44.

Next, in step S24, the calculation unit 38 calculates the LCA values for the product when the estimated material blending ratios and specific information represented by each candidate have been employed as the designated basic configuration information.

Next, in step S26, the output unit 40 acquires, as additional information, documents corresponding to the product information represented by each candidate in the support information, related information extracted from the documents, or information searched for on the internet based on the product information represented by each candidate in the support information.

Next, in step S28, the output unit 40 associates each of the candidates for material blending ratios and specific information with the environmental impact indicators calculated for each candidate, ranks a predetermined number of the candidates with the top environmental impact indicators, and outputs the support information to which the additional information has been added, and the support process ends.

As described above, the material search support device pertaining to this embodiment acquires product information collected from documents on the internet for each of a plurality of products, the product information including basic configuration information of the products, blending ratios of materials included in the products, and specific information including at least one of physical properties of the products, biomass content of the products, and process conditions during use of the products. Furthermore, the material search support device estimates one or more candidates for material blending ratios and specific information with respect to the basic configuration information of a designated product using an estimation model trained to estimate material blending ratios and specific information with respect to the basic configuration information of the products based on the acquired product information. Additionally, the material search support device calculates, for each of the estimated candidates, environmental impact indicators based on the material blending ratios and the specific information represented by each of the candidates and outputs support information that associates each of the candidates with the calculated environmental impact indicators. Because of this, searches for appropriate materials that are carbon neutral can be supported.

It will be noted that the material search support device may be equipped with the function of the collection device in the above embodiment. Furthermore, although in the above embodiment a case was described where the acquisition unit of the material search support device extracts and acquires the product information from the documents collected by the collection device, the collection device may be configured to also extract the product information and input it to the material search support device.

Furthermore, the processes that the CPU executed by reading software (programs) in the above embodiment may also be executed by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the processes may be executed by one of these various types of processors or may be executed by a combination of two or more processors of the same type or different types (e.g., multiple FPGAs, a combination of a CPU and an FPGA, etc.). Furthermore, the hardware structures of these various types of processors are more specifically electrical circuits in which circuit elements such as semiconductor devices are combined.

Furthermore, although in the above embodiment an aspect was described where the material search support program was stored (installed) beforehand in a storage device, the program is not limited to this. The program may also be provided in a form in which it is stored in a storage medium such as a CD-ROM, a DVD-ROM, or a USB memory. Furthermore, the program may also take a form in which it is downloaded via a network from an external device.

Below, supplementary items are described.

### (Supplementary Item 1)

A material search support device comprising:
an acquisition unit that acquires product information collected from documents on the internet for each of a plurality of products, the product information including basic configuration information of the products, blending ratios of materials included in the products, and specific information including at least one of physical properties of the products, biomass content of the products, and process conditions during use of the products;
an estimation unit that estimates one or more candidates for material blending ratios and specific information with respect to the basic configuration information of a designated product using an estimation model trained to estimate material blending ratios and specific information with respect to the basic configuration information of the products based on the product information acquired by the acquisition unit;
a calculation unit that calculates, for each of the candidates estimated by the estimation unit, environmental impact indicators based on the material blending ratios and the specific information represented by each of the candidates; and
an output unit that outputs support information that associates each of the candidates with the environmental impact indicators calculated by the calculation unit.

### (Supplementary Item 2)

The material search support device of supplementary item 1, wherein the acquisition unit extracts from the documents, and acquires as the product information, information relating to keywords corresponding to the product information.

### (Supplementary Item 3)

The material search support device of supplementary item 1 or supplementary item 2, wherein the documents include at least one of patent documents and public information of companies including catalogs.

### (Supplementary Item 4)

The material search support device of any one of supplementary item 1 to supplementary item 3, wherein the material search support device includes a collection unit that collects the documents from the internet.

### (Supplementary Item 5)

The material search support device of any one of supplementary item 1 to supplementary item 4, wherein the basic configuration information of the products includes general configurations of the products and types of materials that are utilized.

### (Supplementary Item 6)

The material search support device of any one of supplementary item 1 to supplementary item 5, wherein the calculation unit calculates, as the environmental impact indicators, carbon dioxide emissions relating to the products when the material blending ratios and the specific information represented by the candidates have been employed.

### (Supplementary Item 7)

The material search support device of any one of supplementary item 1 to supplementary item 6, wherein the output unit outputs support information that ranks a predetermined number of the candidates with the top environmental impact indicators.

### (Supplementary Item 8)

The material search support device of any one of supplementary item 1 to supplementary item 7, wherein the output unit adds to the support information and outputs the documents corresponding to the product information, related information extracted from the documents, or information searched for on the internet based on the support information.

### (Supplementary Item 9)

The material search support device of any one of supplementary item 1 to supplementary item 8, wherein the material search support device includes a training unit that trains the estimation model based on the product information acquired by the acquisition unit.

### Reference signs list

- 10: Material Search Support Device

- 12: CPU
- 14: Memory
- 16: Storage Device
- 18: Input Device
- 20: Output Device
- 22: Storage Medium Reading Device
- 24: Communication I/F
- 26: Bus
- 30: Collection Device
- 32: Acquisition Unit
- 34: Training Unit
- 36: Estimation Unit
- 38: Calculation Unit
- 40: Output Unit
- 42: Product Information DB
- 44: Estimation Model

## Claims

1. A material search support device comprising:
an acquisition unit that acquires product information collected from documents on the internet for each of a plurality of products, the product information including basic configuration information of the products, blending ratios of materials included in the products, and specific information including at least one of physical properties of the products, biomass content of the products, and process conditions during use of the products;
an estimation unit that estimates one or more candidates for material blending ratios and specific information with respect to the basic configuration information of a designated product using an estimation model trained to estimate material blending ratios and specific information with respect to the basic configuration information of the products based on the product information acquired by the acquisition unit;
a calculation unit that calculates, for each of the candidates estimated by the estimation unit, environmental impact indicators based on the material blending ratios and the specific information represented by each of the candidates; and
an output unit that outputs support information that associates each of the candidates with the environmental impact indicators calculated by the calculation unit.

2. The material search support device of claim 1, wherein the acquisition unit extracts from the documents, and acquires as the product information, information relating to keywords corresponding to the product information.

3. The material search support device of claim 1 or claim 2, wherein the documents include at least one of patent documents or public information of companies including catalogs.

4. The material search support device of claim 1 or claim 2, wherein the material search support device includes a collection unit that collects the documents from the internet.

5. The material search support device of claim 1 or claim 2, wherein the basic configuration information of the products includes general configurations of the products and types of materials that are utilized.

6. The material search support device of claim 1 or claim 2, wherein the calculation unit calculates, as the environmental impact indicators, carbon dioxide emissions relating to the products when the material blending ratios and the specific information represented by the candidates have been employed.

7. The material search support device of claim 1 or claim 2, wherein the output unit outputs support information that ranks a predetermined number of the candidates with top environmental impact indicators.

8. The material search support device of claim 1 or claim 2, wherein the output unit adds to the support information and outputs the documents corresponding to the product information, related information extracted from the documents, or information searched for on the internet based on the support information.

9. The material search support device of claim 1 or claim 2, wherein the material search support device includes a training unit that trains the estimation model based on the product information acquired by the acquisition unit.

10. A material search support method executed by a material search support device including an acquisition unit, an estimation unit, a calculation unit, and an output unit, wherein:
the acquisition unit acquires product information collected from documents on the internet for each of a plurality of products, the product information including basic configuration information of the products, blending ratios of materials included in the products, and specific information including at least one of physical properties of the products, biomass content of the products, and process conditions during use of the products;
the estimation unit estimates one or more candidates for material blending ratios and specific information with respect to the basic configuration information of a designated product using an estimation model trained to estimate material blending ratios and specific information with respect to the basic configuration information of the products based on the product information acquired by the acquisition unit;
the calculation unit calculates, for each of the candidates estimated by the estimation unit, environmental impact indicators based on the material blending ratios and the specific information represented by each of the candidates; and
the output unit outputs support information that associates each of the candidates with the environmental impact indicators calculated by the calculation unit.

11. A material search support program for causing a computer to function as:
an acquisition unit that acquires product information collected from documents on the internet for each of a plurality of products, the product information including basic configuration information of the products, blending ratios of materials included in the products, and specific information including at least one of physical properties of the products, biomass content of the products, and process conditions during use of the products;
an estimation unit that estimates one or more candidates for material blending ratios and specific information with respect to the basic configuration information of a designated product using an estimation model trained to estimate material blending ratios and specific information with respect to the basic configuration information of the products based on the product information acquired by the acquisition unit;
a calculation unit that calculates, for each of the candidates estimated by the estimation unit, environmental impact indicators based on the material blending ratios and the specific information represented by each of the candidates; and
an output unit that outputs support information that associates each of the candidates with the environmental impact indicators calculated by the calculation unit.
